# EUROPEAN PATENT APPLICATION

(11) **EP 2 892 072 A1**
(43) Date of publication of application: **08.07.2015**
(21) Application number: 13833798.5
(22) Date of filing: 04.07.2013
(51) Int. Cl.: H01H 47/32, H01H 9/54, H03K 17/695

(54) **SWITCHING METHOD AND DEVICE THEREFOR**

(30) Priority: 31.08.2012 JP 2012191047
(71) Applicant: Yazaki Corporation, Tokyo 108-0073 (JP)
(72) Inventor: MORIMOTO, Mitsuaki, Susono-shi Shizuoka 410-1107 (JP); OISHI, Eiichiro, Susono-shi Shizuoka 410-1107 (JP)
(74) Representative: Hoffmann Eitle
(86) International application number: PCT/JP2013/068355
(87) International publication number: WO 2014/034264

(57) **Abstract**

Although an FET (2) turns off when an external switch (11) is turned off, and an FET (1) of a drive circuit unit (7) turns on as the gate thereof is biased, no electricity from a power source (B) is supplied to a load (3) because the external switch (11) is off. When the external switch (11) is turned on, a controller (9a) of a control circuit unit (9) outputs a PMW signal to the gate of FET (2), and FET (2) turns on during an off-period of the PMW signal. Consequently, FET (1) performs on/off operations (off during an on-period and on during the off-period of the PMW signal) in synchronization with changes in signal level of the PMW signal. In addition, if FET (2) of the control circuit unit (9) becomes unable to turn on while the external switch (11) is on, the gate of FET (1) of the drive circuit unit (7) is kept at the bias potential, and FET (1) stays on.

## Description

### BACKGROUND OF THE INVENTION

### Technical Field

The present invention relates to a switching method and a switching device which perform on/off driving of a switch using a PWM signal output from a control circuit.

### Background Arts

A switching device which performs on/off driving of a switch using a relay is usually used to turn on and off a power supply to a load in a circuit in which a large current flows. There is a demand for this switching device to suppress heat generation from a relay to which electricity is being distributed.

Hence, a switching element provided on an electricity distribution path of a relay coil in the relay is turned on and off using a PWM signal having a changeable duty ratio, and, when an on/off state of the switch is switched by the electricity distribution to the relay coil, the duty ratio of the PWM signal is lowered to lower a flowing current of the relay coil. Consequently, it is possible to lower a flowing current of the relay to a lower limit value necessary for maintaining the switch in the state as is after the switching, and reduce heat generation from the relay.

Thus, in a switching device which uses a PWM signal to distribute electricity to a relay coil, the PWM signal for controlling a flowing current of the relay coil is output from a control circuit. This control circuit is configured using a dedicated IC, a microcomputer (CPU) or a discrete circuit (e.g. Patent Literature 1).

### Citation List

### Patent Literature

Patent Literature 1: Japanese Patent Application Publication No. 2006-114446 A

### SUMMARY OF THE INVENTION

In the above-described switching device, when failure occurs in the control circuit and the PWM signal cannot be used to control the flowing current of the relay coil, it hardly becomes possible to switch an on/off state of a power supply to a load. For example, in a case of turning on the switch by the electricity distribution to the relay coil, when failure occurs in the control circuit of the relay coil, it hardly becomes possible to turn on the switch and supply power to the load.

The above-described load relates to, for example, a vehicle traveling system such as engine control and brake control in some cases. Hence, it is desirable to avoid a situation in which it hardly becomes possible to supply power to the load due to failure in the control circuit of the relay coil.

Furthermore, such a demand is also common not only to a case where a switching element provided on an electricity distribution path of a relay coil is turned on and off using a PMW signal but also to a switching device which uses a PWM signal to turn on and off a switching element which functions by itself as a switch which turns on and off a power supply to a load.

The present invention has been made in light of the above-described circumstances. An object of the present invention is to provide a switching method and a switching device which can switch an on/off state of a switching element even when failure occurs in a control circuit which outputs a PWM signal and the PWM signal is not output, in use of the PWM signal for performing on/off driving of a switching device used to turn on and off a power supply to a load.

To achieve the above-described object, a switching method of the present invention is a switching method of switching a potential of a control terminal of a switching element connected to a power source to be turned on and off in conjunction with a power supply from the power source to a power feeding target, between a bias potential which turns on the switching element and an unbiased potential which turns off the switching element according to a PWM signal output from a control circuit to the control terminal of the switching element during input of a control signal, the switching method including: turning on and off the input of the control signal to the control circuit with a switch to distribute or stop electricity from the power source to the switching element which is turned on by switching the potential of the control terminal to the bias potential, or switch the potential of the control terminal between the bias potential and the unbiased potential.

Note that the switching method of the present invention can be executed by a switching device which turns on and off a switching element connected to a power source to be turned on and off in conjunction with a power supply from the power source to a power feeding target, according to a PWM signal output from a control circuit to a control terminal of the switching element during input of a control signal, the switching device including: a control signal output circuit which outputs the control signal to the control circuit; a switch which turns on and off the input of the control signal from the control signal output circuit to the control circuit; and a drive circuit which, during input of the PWM signal from the control circuit, alternately changes a potential of the control terminal to a bias potential which turns on the switching element and an unbiased potential which turns off the switching element in synchronization with a change in a signal level of the PWM signal, and, during non-input of the PWM signal, switches the potential of the control terminal to the bias potential, wherein the switch is connected in series with the switching element.

Furthermore, the switching method of the present invention can be executed by a switching device which turns on and off a switching element connected to a power source to be turned on and off in conjunction with a power supply from the power source to a power feeding target, according to a PWM signal output from a control circuit to a control terminal of the switching element during input of a control signal, the switching device including: a control signal output circuit which outputs the control signal to the control circuit; a switch which turns on and off the input of the control signal from the control signal output circuit to the control circuit; and a drive circuit which, during input of the PWM signal from the control circuit, alternately changes a potential of the control terminal to a bias potential which turns on the switching element and an unbiased potential which turns off the switching element in synchronization with a change in a signal level of the PWM signal, and, during non-input of the PWM signal, switches the potential of the control terminal to the bias potential while the switch is turned on and to the unbiased potential while the switch is turned off.

Then, according to the switching method and the switching device of the present invention, the potential of the control terminal of the switching element is switched to the bias potential while the switch is turned on regardless of whether the control circuit operates or does not operate, and power from the power source becomes distributed to the switching element. Meanwhile, while the switch is turned off, a power feed circuit is opened by the switching element of which the control terminal has the potential switched to the unbiased potential or by the switch which is turned off, and power from the power source becomes undistributed to the switching element.

Consequently, even when failure occurs in a PWM signal outputting function of the control circuit and a PMW signal is not input to the control terminal of the switching element, it is possible to switch an on/off state of the switching element by turning on and off the switch.

According to the switching device of the present invention, it is possible to switch an on/off state of a switching element even when failure occurs in a control circuit which outputs a PWM signal and the PWM signal is not output.

### BRIEF DESCRIPTION OF THE DRAWINGS

Fig. 1 is a circuit diagram illustrating a fundamental configuration of a switching device according to a first embodiment of the present invention;
Fig. 2 is a circuit diagram illustrating a fundamental configuration of a switching device according to a modification of the first embodiment illustrated in Fig. 1;
Fig. 3 is a circuit diagram illustrating a fundamental configuration of a switching device according to a second embodiment of the present invention;
Fig. 4 is a circuit diagram illustrating a fundamental configuration of a switching device according to a third embodiment of the present invention;
Fig. 5 is a circuit diagram illustrating a fundamental configuration of a switching device according to a modification of the third embodiment illustrated in Fig. 4;
Fig. 6 is a circuit diagram illustrating a fundamental configuration of a switching device according to a fourth embodiment of the present invention;
Fig. 7 is a circuit diagram illustrating a fundamental configuration of a switching device according to a modification of the fourth embodiment illustrated in Fig. 6.

### DESCRIPTION OF THE EMBODIMENTS

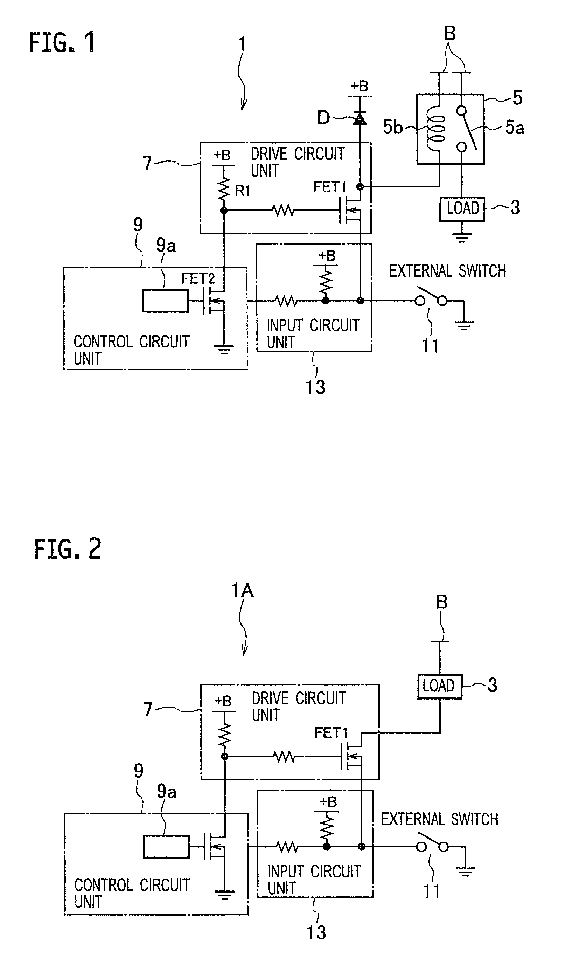

Embodiments of the present invention will be described below with reference to the drawings. Fig. 1 is a circuit diagram illustrating a fundamental configuration of a switching device according to a first embodiment of the present invention.

A switching device 1 of the present embodiment is used to supply power from, for example, a power source B such as a battery of a vehicle to a load 3 (power feeding target) such as a traveling system or a lighting system.

Then, the switching device 1 of the present embodiment has a drive circuit unit 7 (drive circuit) of a relay 5 which turns on and off a power supply from the power source B to the load 3, a control circuit unit 9 (control circuit) which controls on and off of a relay contact 5a of the relay 5 through the drive circuit unit 7, an external switch 11 (switch) which turns on and off a supply of an operating power source to the control circuit unit 9, and an input circuit unit 13 (control signal output circuit) which supplies the operating power source (control signal) to the control circuit unit 9 according to a switching state of the external switch 11.

The drive circuit unit 7 has a back electromotive force short-circuiting diode D which is connected to the power source B in parallel to a coil 5b of the relay 5, an N channel-type first MOSFET (field-effect transistor) FET 1 (switching element; abbreviated as a FET 1 below) which is connected in series to this diode D, and a pull-up resistor R1 which pulls up a gate potential of the FET 1.

The control circuit unit 9 has an N channel-type second MOSFET (field-effect transistor) FET 2 (abbreviated as a FET 2 below) which is connected in series to the pull-up resistor R1, and a source of the FET 2 is grounded. Furthermore, the control circuit unit 9 has a controller 9a which controls a gate potential of the FET 2, and this controller 9a outputs a PWM signal to a gate of the FET 2.

Note that a symbol +B described in a circuit of the switching device 1 indicates a point to which power from the power source B is supplied even when an ignition switch (not illustrated) of a vehicle 1 is turned off. However, power from the power source B may also be supplied to the point +B only when the ignition switch which is not illustrated is turned on.

In the switching device 1 of the present embodiment configured as described above, when the external switch 11 is turned off, the operating power source is not supplied from the input circuit unit 13 to the control circuit unit 9, and the controller 9a does not output a PMW signal to the gate of the FET 2. Therefore, the FET 2 is turned off, and the gate (control terminal) potential of the FET 1 of the drive circuit unit 7 is kept pulled-up at a bias potential (Hi potential) by the pull-up resistor R1. Hence, since the FET 1 is turned on but the external switch 11 is turned off, electricity is not distributed to the coil 5b of the relay 5 and power from the power source B is not supplied to the load 3.

Meanwhile, when the external switch 11 is turned on, the controller 9a of the control circuit unit 9 to which the operating power source is supplied from the input circuit unit 13 outputs the PMW signal to the gate of the FET 2, and the FET 2 is turned on during an on-period of the PMW signal. Thereby, the gate potential of the FET 1 of the drive circuit unit 7 is lowered from the bias potential (High potential) to an unbiased potential (Low potential) during the on-period of the PMW signal (during an on-period of the FET 2).

Hence, the FET 1 performs an on/off operation in synchronization with a change in a signal level of the PMW signal (is turned off during the on-period of the PMW signal and is turned on during an off-period thereof). Then, electricity is distributed to the coil 5b of the relay 5 while the FET 1 is turned on, and power from the power source B is supplied to the load 3 through the relay contact 5a during electricity distribution to the coil 5b.

Furthermore, when the FET 2 of the control circuit unit 9 cannot be turned on while the external switch 11 is turned on, a gate of the FET 1 of the drive circuit unit 7 is kept at the bias potential (High potential), and the FET 1 is kept turned on. Hence, while the external switch 11 is turned on, electricity is distributed to the coil 5b of the relay 5, and power from the power source B is supplied to the load 3.

Consequently, according to the switching device 1 of the present embodiment, even when the control circuit unit 9 cannot output the PMW signal, it is possible to turn on and off a power supply to the load 3 by turning on and off the external switch 11.

Note that a configuration may be employed such that when a current flowing in a load 3 during a power supply, a FET 1 is connected in series to a power feeding path on which a power source B and the load 3 are connected and, instead of a relay contact 5a of a relay 5, the FET 1 turns on and off a supply of the power source B to the load 3 without using the relay 5, as in a switching device 1A of a modification illustrated in the circuit diagram of Fig. 2.

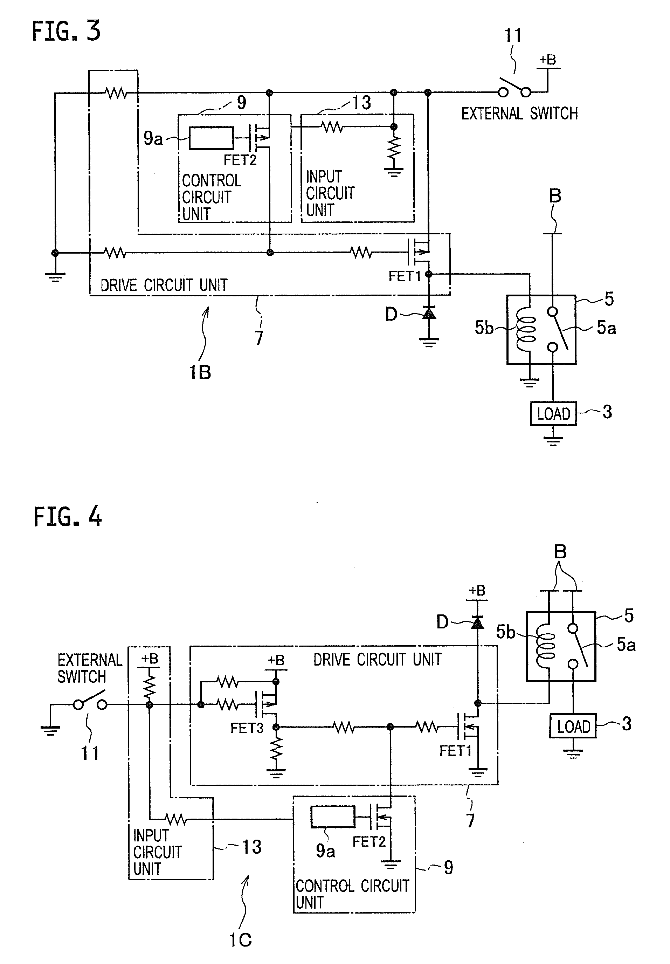

Furthermore, the above-described switching devices 1 and 1A of the first embodiment and the modification thereof use the N channel-type MOSFET for the FET 1. However, a configuration of using a P channel-type MOSFET for a FET 1 can also be employed as in a switching device 1B according to a second embodiment illustrated in Fig. 3.

In the switching device 1B of the second embodiment, an external switch 11 is connected in series to a drain of the FET 1, and a coil 5b of a relay 5 and a back electromotive force short-circuiting diode D are connected in parallel to a source side of the FET 1.

Furthermore, in the switching device 1B of the present embodiment, a drain of a FET 2 of a control circuit unit 9 using a P channel-type MOSFET is connected to the drain of the FET 1, and a source of the FET 2 is connected to a gate of the FET 1.

In the switching device 1B of the present invention configured as described above, when the external switch 11 is turned off, an operating power source is not supplied from an input circuit unit 13 to the control circuit unit 9 and a controller 9a does not output a PMW signal to a gate of the FET 2. Therefore, the FET 2 is turned off, and a gate (control terminal) potential of the FET 1 of a drive circuit unit 7 is kept at a bias potential (Low potential). Hence, since the FET 1 is turned on but the external switch 11 is turned off, electricity is not distributed to the coil 5b of the relay 5 and power from a power source B is not supplied to a load 3.

Meanwhile, when the external switch 11 is turned on, the controller 9a of the control circuit unit 9 to which the operating power source is supplied from the input circuit unit 13 outputs the PMW signal to the gate of the FET 2, and the FET 2 is turned on during an off-period of the PMW signal. Thereby, the gate potential of the FET 1 of the drive circuit unit 7 rises from the bias potential (Low potential) to an unbiased potential (High potential) during the off-period of the PMW signal (during an on-period of the FET 2).

Hence, the FET 1 performs an on/off operation in synchronization with a change in a signal level of the PMW signal (is turned on during an on-period of the PMW signal and is turned off during the off-period thereof). Then, electricity is distributed to the coil 5b of the relay 5 while the FET 1 is turned on, and power from the power source B is supplied to the load 3 through a relay contact 5a during electricity distribution to the coil 5b.

Furthermore, when the FET 2 of the control circuit unit 9 cannot be turned on while the external switch 11 is turned on, the gate potential of the FET 1 of the drive circuit unit 7 is kept at the bias potential and the FET 1 is kept turned on. Hence, while the external switch 11 is turned on, electricity is distributed to the coil 5b of the relay 5, and power from the power source B is supplied to the load 3.

Consequently, according to the switching device 1B of the present embodiment, even when the control circuit unit 9 cannot output the PMW signal, it is possible to turn on and off a power supply to the load 3 by turning on and off the external switch 11.

Note that, in the above-described switching devices 1, 1A and 1B of the first and second embodiments and the modification thereof, the external switch 11 is connected in series to the FET 1 of the control circuit unit 9. However, it is also possible to prevent a large current from the coil 5b of the relay 5 at the time of back electromotive force short-circuiting and a large current flowing to the load 3 through the relay contact 5a of the relay 5 from flowing to the external switch 11.

For example, in the switching device 1 of the first embodiment illustrated in Fig. 1, the external switch 11 is connected to a source of the FET 1 of the drive circuit unit 7. However, in a switching device 1C according to a third embodiment illustrated in Fig. 4, an external switch 11 is connected to a gate of a P channel-type MOSFET third MOSFET (field-effect transistor) FET 3 (abbreviated as a FET 3 below) provided in a drive circuit unit 7, instead of the pull-up resistor R1 of the first embodiment. When the external switch 11 is turned off, a gate potential is pulled up by a power source B to an unbiased potential (High potential), and thus the FET 3 is turned off.

When the external switch 11 is turned on, the gate potential of the FET 3 lowers to a bias potential (Low potential) and the FET 3 is turned on. Furthermore, when the external switch 11 is turned on, a controller 9a of a control circuit unit 9 to which an operating power source is supplied from an input circuit unit 13 outputs a PMW signal to a gate of a FET 2. Hence, a gate potential of a FET 1 becomes the unbiased potential (Low potential) during an on-period of the PMW signal (during an off-period of the FET 2), and the gate potential of the FET 1 becomes the bias potential (High potential) during an off-period of a PWM signal (during an on-period of the FET 2).

Consequently, the FET 1 performs an on/off operation in synchronization with a change in a signal level of the PMW signal (is turned off during the on-period of the PMW signal and is turned on during an off-period thereof). Then, electricity is distributed to a coil 5b of a relay 5 while the FET 1 is turned on, and power from the power source B is supplied to a load 3 through a relay contact 5a during electricity distribution to the coil 5b.

Furthermore, when the FET 2 of the control circuit unit 9 cannot be turned on while the external switch 11 is turned on, a gate of the FET 1 of the drive circuit unit 7 is kept at the bias potential (High potential) and the FET 1 is kept turned on while the external switch 11 is turned on. Consequently, while the external switch 11 is turned on, electricity is distributed to the coil 5b of the relay 5, and power form the power source B is supplied to the load 3.

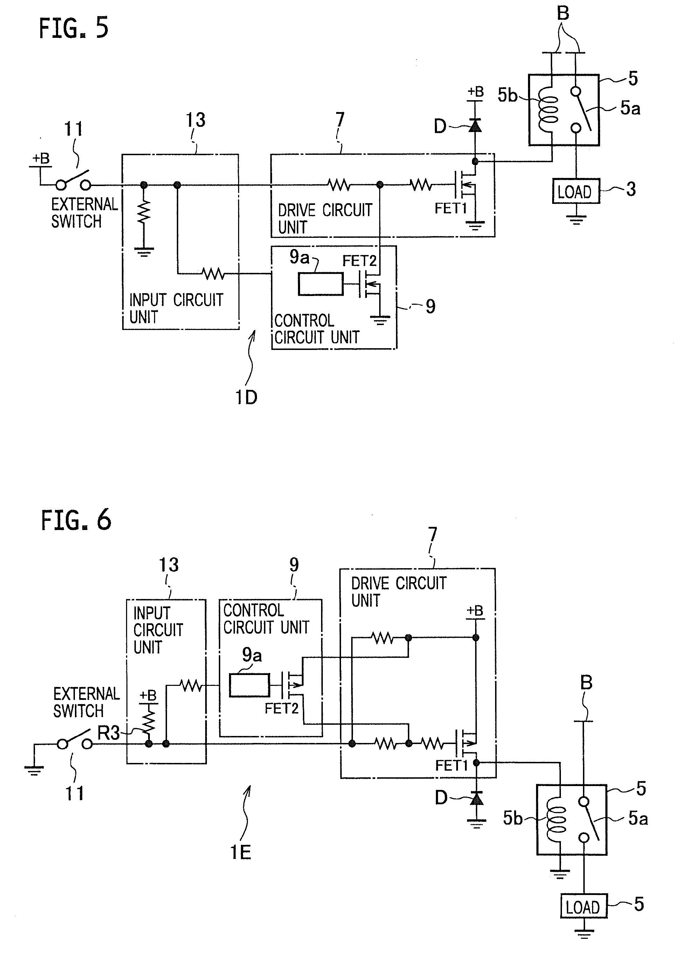

Further, in a switching device 1D of a modification illustrated in Fig. 5, a gate of a FET 1 of a drive circuit unit 7 is connected to a point +B (power source B) through an external switch 11. In this switching device 1D, when the external switch 11 is turned off, a gate potential of the FET 1 becomes an unbiased potential (Low potential), and therefore the FET 1 is turned off. Furthermore, an operating power source is not supplied from an input circuit unit 13 to a control circuit unit 9, and a controller 9a does not output a PMW signal to a gate of a FET 2. Hence, the FET 2 is also turned off.

In this state, the gate potential of the FET 1 is kept at the unbiased potential (Low potential) and the FET 1 is turned off. Therefore, electricity is not distributed to a coil 5b of a relay 5, and power form the power source B is not supplied to a load 3.

Meanwhile, when the external switch 11 is turned on, the gate potential of the FET 1 of the drive circuit unit 7 is pulled up by the power source B to a bias potential (High potential). Furthermore, when the external switch 11 is turned on, the controller 9a of the control circuit unit 9 to which the operating power source is supplied from the input circuit unit 13 outputs the PMW signal to the gate of the FET 2, and the FET 2 is turned on during an on-period of the PMW signal.

Thereby, the gate potential of the FET 1 of the drive circuit unit 7 is lowered from the bias potential (High potential) to the unbiased potential (Low potential) during the on-period of the PMW signal (during an on-period of the FET 2).

Consequently, the FET 1 performs an on/off operation in synchronization with a change in a signal level of the PMW signal (is turned off during the on-period of the PMW signal and is turned on during an off-period thereof). Then, electricity is distributed to the coil 5b of the relay 5 while the FET 1 is turned on, and power from the power source B is supplied to the load 3 through a relay contact 5a during electricity distribution to the coil 5b.

Furthermore, when the FET 2 of the control circuit unit 9 cannot be turned on while the external switch 11 is turned on, the gate of the FET 1 of the drive circuit unit 7 is kept at the bias potential (High potential), and the FET 1 is kept turned on. Hence, while the external switch 11 is turned on, electricity is distributed to the coil 5b of the relay 5, and power form the power source B is supplied to the load 3.

Note that a configuration of using a P channel-type MOSFETs for a FET 1 and a FET 2 can also be employed. That is, in a similar manner to the switching device 1B of the second embodiment illustrated in Fig. 3, in a switching device 1E according to a fourth embodiment illustrated in Fig. 6, an external switch 11 is connected to a gate of a FET 1 of a drive circuit unit 7 using a P channel-type MOSFET.

Furthermore, in the switching device IE, a drain of the FET 2 of a control circuit unit 9 using a P channel-type MOSFET is connected to a drain of the FET 1, and a source of the FET 2 is connected to the gate of the FET 1. Then, a gate potential of the FET 1 is pulled up to a potential of a power source B, i.e., an unbiased potential (High potential) by a pull-up resistor R3 of an input circuit unit 13.

In the switching device 1E of the present embodiment configured as described above, when the external switch 11 is turned off, an operating power source is not supplied from the input circuit unit 13 to the control circuit unit 9, and a controller 9a does not output a PMW signal to a gate of the FET 2. Hence, the FET 2 is turned off, and the gate potential of the FET 1 of the drive circuit unit 7 is kept at the unbiased potential (High potential). Therefore, the FET 1 is turned off, electricity is not distributed to a coil 5b of a relay 5 and power from the power source B is not supplied to a load 3.

Meanwhile, when the external switch 11 is turned on, the gate potential of the FET 1 of the drive circuit unit 7 grounded through the external switch 11 is pulled down to a bias potential (Low potential). Furthermore, when the external switch 11 is turned on, the controller 9a of the control circuit unit 9 to which the operating power source is supplied from the input circuit unit 13 outputs the PMW signal to the gate of the FET 2, and the FET 2 is turned on during an off-period of the PMW signal.

Thereby, the gate potential of the FET 1 of the drive circuit unit 7 rises from the bias potential (Low potential) to the unbiased potential (High potential) during the off-period of the PMW signal (during an on-period of the FET 2).

Hence, the FET 1 performs an on/off operation in synchronization with a change in a signal level of the PMW signal (is turned on during an on-period of the PMW signal and is turned off during the off-period thereof). Then, electricity is distributed to the coil 5b of the relay 5 while the FET 1 is turned on, and power from the power source B is supplied to the load 3 through a relay contact 5a during electricity distribution to the coil 5b.

Furthermore, when the FET 2 of the control circuit unit 9 cannot be turned while the external switch 11 is turned on, the gate of the FET 1 of the drive circuit unit 7 is kept at the bias potential (Low potential), and the FET 1 is kept turned on. Consequently, while the external switch 11 is turned on, electricity is distributed to the coil 5b of the relay 5, and power from the power source B is supplied to the load 3.

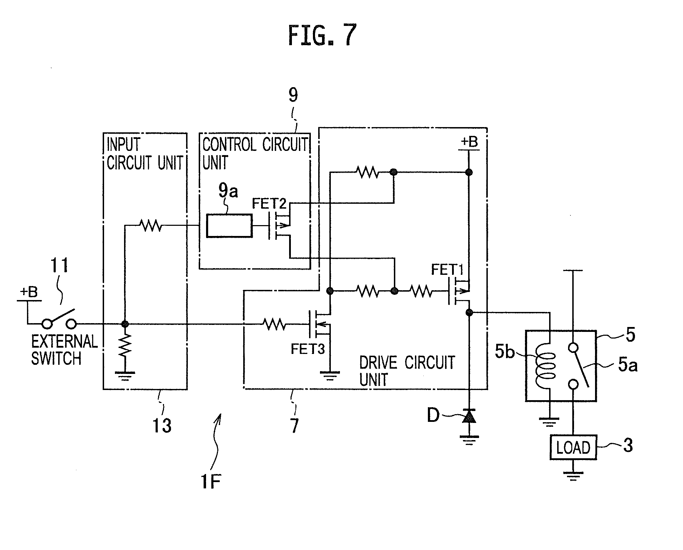

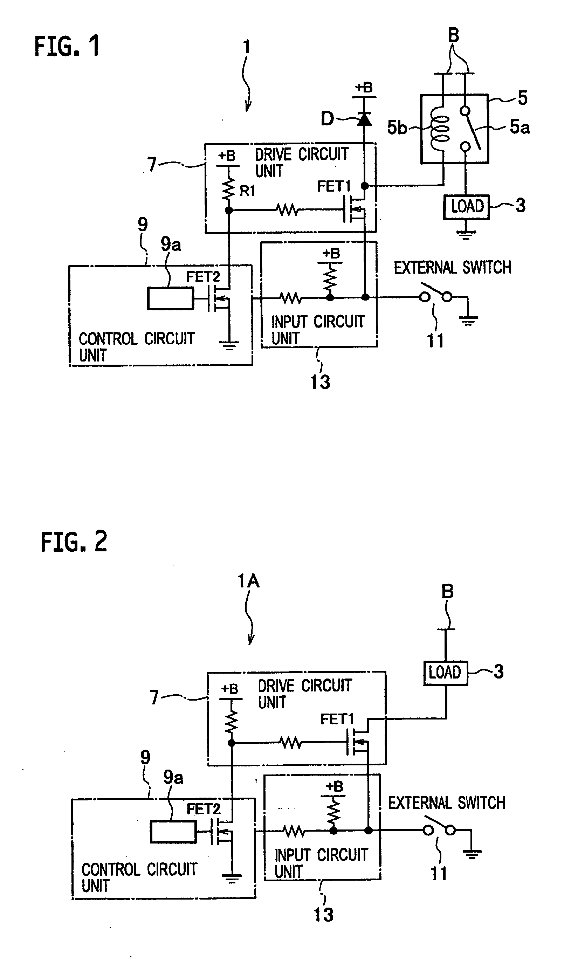

Further, in a switching device IF according to a modification illustrated in Fig. 7, a gate of a FET 1 of a drive circuit unit 7 is grounded through a source-drain of an N channel-type MOSFET FET 3 provided in the drive circuit unit 7. Furthermore, in this switching device 1 F, a gate of the FET 3 is connected to a point +B (power source B) through an external switch 11.

In this switching device IF, when the external switch 11 is turned off, a gate potential of the FET 1 lowers to an unbiased potential (Low potential), and the FET 3 is turned off. Furthermore, when the external switch 11 is turned off, an operating power source is not supplied from an input circuit unit 13 to a control circuit unit 9, and a controller 9a does not output a PMW signal to a gate of a FET 2. Hence, the FET 2 is turned off, and the gate potential of the FET 1 of the drive circuit unit 7 is kept at the unbiased potential (Low potential). Therefore, the FET 1 is turned off, electricity is not distributed to a coil 5b of a relay 5, and power from a power source B is not supplied to a load 3.

Meanwhile, when the external switch 11 is turned on, a gate potential of the FET 3 of the drive circuit unit 7 grounded through the external switch 11 is pulled up to a bias potential (High potential), and therefore the FET 3 is turned on. Consequently, the gate potential of the FET 1 is pulled down to the bias potential (Low potential). Furthermore, when the external switch 11 is turned on, the controller 9a of the control circuit unit 9 to which the operating power source is supplied from the input circuit unit 13 outputs the PMW signal to the gate of the FET 2, and the FET 2 is turned on during an off-period of the PMW signal.

Thereby, the gate potential of the FET 1 of the drive circuit unit 7 rises from the bias potential (Low potential) to the unbiased potential (High potential) during the off-period of the PMW signal (during an on-period of the FET 2).

Consequently, the FET 1 performs an on/off operation in synchronization with a change in a signal level of the PMW signal (is turned on during an on-period of the PMW signal and is turned off during the off-period thereof). Then, electricity is distributed to the coil 5b of the relay 5 while the FET 1 is turned on, and power from the power source B is supplied to the load 3 through a relay contact 5a during electricity distribution to the coil 5b.

Furthermore, when the FET 2 of the control circuit unit 9 cannot be turned on while the external switch 11 is turned on, the gate of the FET 1 of the drive circuit unit 7 is kept at the bias potential (Low potential), and the FET 1 is kept turned on. Consequently, while the external switch 11 is turned on, electricity is distributed to the coil 5b of the relay 5, and power from the power source B is supplied to the load 3.

According to the above-described switching devices 1C, 1D, 1E and 1F according to the third and fourth embodiments and the modifications thereof, it is possible to turn on and off a power supply to the load 3 by turning on and off the external switch 11 even when the control circuit unit 9 cannot output the PMW signal.

### INDUSTRIAL APPLICABILITY

The present invention is very useful for performing on/off driving of a switch using a PWM signal output from a control circuit.

### REFERENCE SIGNS LIST

- 1, 1A, 1B, 1C, 1D, 1E, 1F: Switching device
- 3: Load (Power feeding target)
- 5: Relay
- 5a: Relay contact
- 5b: Coil
- 7: Drive circuit unit (Drive circuit)
- 9: Control circuit unit (Control circuit)
- 11: External switch (Switch)
- 13: Input circuit unit (Control signal output circuit)
- B: Power source
- D: Back electromotive force short-circuiting diode
- FET 1: First MOSFET (Switching element)
- FET 2: Second MOSFET
- FET 3: Third MOSFET
- R1, R3: Pull-up resistor

## Claims

1. A switching method for switching a potential of a control terminal of a switching element connected to a power source to be turned on and off in conjunction with a power supply from the power source to a power feeding target, between a bias potential which turns on the switching element and an unbiased potential which turns off the switching element according to a PWM signal output from a control circuit to the control terminal of the switching element during input of a control signal, the switching method **characterized by**:
turning on and off the input of the control signal to the control circuit with the switch, the potential of the control terminal is switched to the bias potential and the switching element is turned on supplying or shutting off the electric power from the power source, or switch the potential of the control terminal between the bias potential and the unbiased potential.

2. A switching device which turns on and off a switching element connected to a power source to be turned on and off in conjunction with a power supply from the power source to a power feeding target, according to a PWM signal output from a control circuit to a control terminal of the switching element during input of a control signal, the switching device **characterized by**:
a control signal output circuit which outputs the control signal to the control circuit;
a switch which turns on and off the input of the control signal from the control signal output circuit to the control circuit; and
a drive circuit which, during input of the PWM signal from the control circuit, alternately changes a potential of the control terminal to a bias potential which turns on the switching element and an unbiased potential which turns off the switching element in synchronization with a change in a signal level of the PWM signal, and, during non-input of the PWM signal, switches the potential of the control terminal to the bias potential, wherein
the switch is connected in series with the switching element.

3. A switching device which turns on and off a switching element connected to a power source to be turned on and off in conjunction with a power supply from the power source to a power feeding target, according to a PWM signal output from a control circuit to a control terminal of the switching element during input of a control signal, the switching device **characterized by**:
a control signal output circuit which outputs the control signal to the control circuit;
a switch which turns on and off the input of the control signal from the control signal output circuit to the control circuit; and
a drive circuit which, during input of the PWM signal from the control circuit, alternately changes a potential of the control terminal to a bias potential which turns on the switching element and an unbiased potential which turns off the switching element in synchronization with a change in a signal level of the PWM signal, and, during non-input of the PWM signal, switches the potential of the control terminal to the bias potential while the switch is turned on and to the unbiased potential while the switch is turned off.
